# FASCICULE DE BREVET EUROPEEN

(11) **EP 1 966 741 B1**
(45) Date de publication et mention de la délivrance du brevet: **24.06.2009**
(21) Numéro de dépôt: 06847158.0
(22) Date de dépôt: 29.12.2006
(51) Int. Cl.: G06K 19/07

(54) **PROCEDE ET DISPOSITIF DE COMMUNICATION RADIOFREQUENCE**
FUNKFREQUENZ-KOMMUNIKATIONSVERFAHREN UND -VORRICHTUNG
RADIOFREQUENCY COMMUNICATION METHOD AND DEVICE

(30) Priorité: 29.12.2005 FR 0554140
(43) Date de publication de la demande: 10.09.2008
(73) Titulaire: Srett, 75016 Paris (FR)
(72) Inventeur: SALAMITOU, Philippe, 75016 Paris (FR)
(74) Mandataire: den Braber, Gerard Paul
(86) Numéro de dépôt international: PCT/FR2006/002903
(87) Numéro de publication internationale: WO 2007/074246

(56) Documents cités:
- WO-A-20/04023389
- FR-A- 2 779 847
- FR-A- 2 845 802
- US-A1- 2001 007 815

## Description

La présente invention concerne un procédé et un dispositif de communication radiofréquence (RF) fonctionnant par exemple dans la gamme de l'ultra haute fréquence (UHF), c'est-à-dire de 300 à 3000 MHz.

Des dispositifs RF sont couramment associés à des équipements ou à des produits pour diverses applications, telles que l'identification des produits ou des équipements, la logistique, le suivi de la qualité, la surveillance ou encore la maintenance préventive. De façon simplifiée, un dispositif RF est un élément d'un réseau de communication, lequel comporte un lecteur qui gère la communication par ondes radio avec une pluralité de dispositifs RF et un terminal ou serveur composé d'au moins un ordinateur en liaison, avec ou sans fil, avec le lecteur. Le terminal communique avec le lecteur et enregistre et traite des données échangées entre le lecteur et les dispositifs RF.

La structure et le fonctionnement des dispositifs RF sont optimisés pour chaque application. Ces dispositifs ne sont donc généralement, ni identiques, ni compatibles entre eux.

On distingue plusieurs familles de dispositifs RF classées en fonction de leur portée, c'est-à-dire la distance séparant le lecteur des dispositifs RF pour laquelle une communication peut être établie :
- les marqueurs RF-ID (pour "Radio Frequency Identification" en anglais) ou étiquettes ("tags" en anglais) RF-ID. Ce sont des dispositifs UHF fonctionnant sur le principe d'un transpondeur passif. Ils comportent une antenne et un circuit électronique élémentaire (le transpondeur proprement dit) sous forme d'une simple puce. Ils ne comportent pas de circuits UHF actifs et pas nécessairement de source d'énergie telle qu'une pile. Dans ce dernier cas, l'énergie électrique est fournie au marqueur RF-ID par l'onde électromagnétique envoyée par le lecteur. Pour la réception, le marqueur RF-ID détecte la présence d'un signal envoyé par le lecteur et lit la modulation d'amplitude du signal reçu. Pour la transmission, le marqueur RF-ID réfléchit vers le lecteur le signal UHF reçu en le modulant en amplitude ou en phase (par modulation de l'impédance de l'antenne par exemple). Un marqueur RF-ID consomme très peu d'énergie et permet de communiquer le code d'identification du produit auquel il est associé de manière rapide mais sur une courte distance (typiquement quelques mètres).
- les réseaux RF personnels (souvent désigné par "WPAN", "Wireless Personal Area Network" en anglais). Ils permettent la transmission de données diverses, rapidement, sur une moyenne distance (typiquement quelques dizaines de mètres). Ces systèmes comportent des dispositifs RF associés à des produits ou équipements qui communiquent avec un lecteur. Chaque dispositif RF comporte de façon classique une antenne, un transcepteur (transmetteur/récepteur, beaucoup plus complexe qu'un transpondeur un microcontrôleur ou microprocesseur, une mémoire, une source d'alimentation et diverses entrées et sorties. De tels dispositifs sont utilisés par exemple pour communiquer rapidement et de façon temporaire sans avoir à mettre en place une liaison filaire. Ces dispositifs sont typiquement alimentés par un accumulateur rechargeable.
- les systèmes permanents de communication sans fil très basse consommation et de grande portée (jusqu'à quelques kilomètres). Ils permettent notamment de surveiller le fonctionnement des équipements à distance. Ces systèmes comportent des dispositifs RF associés aux équipements, dont l'architecture matérielle est similaire à celle des dispositifs utilisés pour les réseaux RF personnels, mais dont l'architecture logicielle et les protocoles de communication diffèrent. Ces dispositifs sont caractérisés par leur consommation électrique très faible et la grande latence dans l'établissement d'une nouvelle communication. Ces dispositifs comportent typiquement un capteur et son électronique associée et/ou une mémoire de données. Ils assurent la transmission de données récurrentes, lentement, sur une grande distance. Ils sont par exemple utilisés pour la lecture à distance de compteurs d'eau, de gaz ou d'électricité. Ils sont typiquement alimentés par une pile non rechargeable.

Par la suite, on entendra par courte, moyenne et longue distance (ou portée), une distance allant respectivement jusqu'à quelques mètres (cas des transpondeurs passifs RF-ID), quelques dizaines de mètres (cas des réseaux RF personnels) et à quelques centaines de mètres. Ces trois distances ne sont que des ordres de grandeur qui correspondent aux trois familles de technologies indiquées précédemment.

Les dispositifs RF de portées différentes ne sont pas compatibles entre eux car ils utilisent des architectures différentes, optimisées pour répondre aux besoins propres de chaque type de dispositifs. Les dispositifs RF à courte portée utilisent des transpondeurs RF-ID passifs à très faible consommation (de l'ordre du microwatt) et les dispositifs à moyenne et longue portée utilisent des transcepteurs actifs, capables de générer des signaux à la fréquence de la porteuse radio fréquence, mais consommant plus d'énergie (typiquement de l'ordre de quelques 10 milliwatts en émission ou réception).

Cependant il est parfois désirable de disposer, sur un même produit ou équipement, des fonctionnalités combinées de plusieurs types de dispositifs RF. Par exemple, un compteur de gaz disposant d'un dispositif RF à longue portée pour le relevé à distance de la quantité de gaz consommée, pourrait avantageusement bénéficier au moment de sa fabrication et de son expédition des fonctionnalités d'un marqueur RF-ID passif à courte portée. Il pourrait également bénéficier des fonctionnalités d'une liaison rapide à moyenne portée pour permettre la mise à jour de son logiciel embarqué.

Pourtant la juxtaposition de plusieurs dispositifs RF indépendants sur un même produit n'est pas souhaitable pour des raisons de coût, d'encombrement et de qualité de fonctionnement.

La demande de brevet WO 2004/023389 A2 publiée le 18 mars 2004 décrit un dispositif RF permettant de communiquer à courte distance, inférieure à 1 m ("2 pieds"), et à longue distance, inférieure à 160 m ("500 pieds"). Il comprend, pour la communication à longue portée, un transcepteur relié à une antenne permettant à un lecteur de lire le code d'identification du dispositif et, pour la communication à courte portée, une interface reliée à un autre lecteur par liaison sécurisée permettant l'envoi d'informations confidentielles. Lorsque la communication à courte distance est par onde radio, l'interface est un transcepteur similaire à celui utilisé pour la liaison longue portée, mais de plus faible portée.

Le document FR-A-2 845 802 décrit un procédé de communication RF où une communication à courte distance est établie à l'aide d'un transpondeur RF et une communication à moyenne distance à l'aide d'un circuit antenne UHF.

La demande de brevet WO 2005/091997 A2, publiée le 6 octobre 2005, décrit l'utilisation de technologies propres aux systèmes RFID pour accélérer la mise en place d'une communication à moyenne portée (plus particulièrement du type "Bluetooth") entre deux téléphones mobiles. Dans cette demande de brevet, les deux téléphones peuvent alternativement jouer le rôle de lecteur (ou maître) et de transpondeur RF-ID (ou esclave). Ils comprennent chacun des moyens de communication Bluetooth et un transpondeur RF-ID passif ou actif. Un signal d'interrogation du type RF-ID est envoyé par le terminal lecteur. Le transpondeur du terminal esclave répond en envoyant l'adresse de son module de communication Bluetooth et avertit un module de contrôle du terminal esclave de la demande de communication Bluetooth. Le module de contrôle détermine si la communication est acceptable ou non (par exemple, l'utilisateur du terminal esclave a pu désactiver la fonction Bluetooth). Si la communication est acceptable, le module Bluetooth du terminal esclave se met alors en écoute. Le terminal lecteur rentre en communication avec le module de communication Bluetooth du terminal esclave. En ce qui concerne éventuellement les communications longues portées, elles sont réalisées par les moyens classiques en téléphonie mobile, en technologie GSM par exemple. Les technologies Bluetooth et GSM nécessitent pour leur mise en oeuvre des courants électriques d'intensités relativement élevées. Il est bien connu que les téléphones mobiles comportent des piles que l'utilisateur doit recharger régulièrement, au moins après quelques jours, selon l'utilisation et la localisation du téléphone.

La présente invention propose un procédé et un dispositif RF capable de fonctionner sur au moins des courtes distances (fonctionnement en marqueur RF-ID) et des moyennes distances. Selon un mode de réalisation préféré, le dispositif est également capable de fonctionner en longue portée. Pour ces trois modes de fonctionnement, le dispositif consomme très peu de courant électrique. De ce fait la durée de vie de la source alimentant électriquement les circuits du dispositif (de préférence une pile), et donc la durée de vie du dispositif lorsque la pile n'est pas rechargeable ou ne peut pas être changée, peut être très longue (par exemple de l'ordre d'une dizaine d'années). De plus, le dispositif est relativement peu onéreux comparé à la somme des coûts d'un dispositif à courte portée, d'un dispositif à moyenne portée et d'un dispositif à longue portée.

Pour obtenir une longue autonomie (dix ans par exemple), le dispositif selon l'invention reste "endormi" la majorité du temps dans un mode de fonctionnement passif à très faible consommation d'énergie. En d'autres termes, le dispositif n'est activé que lorsqu'il est sollicité pour communiquer avec un dispositif d'interrogation ou lecteur, passant alors d'un mode "endormi" ou passif à un mode actif pour lequel les différents éléments du dispositif peuvent fonctionner, par exemple traiter des signaux. Le passage de l'état passif à l'état actif peut se faire par la mise sous tension électrique (connexion à une source d'alimentation électrique) d'un ou plusieurs composants du dispositif.

Pour les communication à courte et moyenne portée, le réveil du dispositif est effectué par un signal d'interrogation RF-ID émis par le lecteur et capté par une antenne du dispositif, ce qui crée une tension électrique suffisante pour réveiller le dispositif. Pour les communications à courte portée, un transpondeur RF-ID est suffisant pour le fonctionnement du dispositif et il n'est donc pas nécessaire d'utiliser une énergie autre que celle provenant du signal RF-ID du lecteur. Pour les communications à moyenne portée, un signal RF-ID capté par un transpondeur RF-ID du dispositif commande le réveil au moins d'un microcontrôleur, le réveil étant avantageusement réalisé par sa mise sous tension électrique. Pour le fonctionnement en longue portée, une horloge interne réveille le dispositif à intervalles de temps périodiques programmés.

De façon plus précise, l'invention concerne un procédé de communication RF selon lequel une communication peut être établie entre un lecteur et un dispositif RF au moins sur une moyenne distance et sur une courte distance, la communication courte distance étant établie à l'aide d'un transpondeur RF-ID et d'une antenne. Selon l'invention, pour établir la communication à moyenne distance, le lecteur envoie un signal de commande au transpondeur RF-ID afin de commuter au moins un microcontrôleur et un transcepteur d'un état passif à un état actif, le microcontrôleur envoyant au lecteur, à l'aide du transcepteur, un message de réponse comprenant au moins l'identification du dispositif.

Le message de réponse peut également comprendre des données permettant de synchroniser le lecteur et le dispositif.

De préférence, le procédé permet également une communication à longue distance, un signal d'horloge réveillant le microcontrôleur, lequel communique alors avec un lecteur à l'aide du transcepteur.

De façon avantageuse, le microcontrôleur vérifie si le dispositif est déjà en cours de fonctionnement en courte ou moyenne distance et, si c'est le cas, il décide d'établir la communication en fonctionnement longue portée à un instant ultérieur, lequel peut être déterminé de façon aléatoire.

De préférence, la durée de chaque message de la communication longue distance est choisie très inférieure à la durée d'une communication de courte distance. Une communication longue distance peut être découpées en plusieurs messages de transmission - réception et entre deux messages successifs le microcontrôleur vérifie que le lecteur n'émet pas de signal d'interrogation en mode RF-ID.

De façon avantageuse, la communication à moyenne et longue distance utilise la même antenne que pour la communication à courte distance.

Selon un mode de réalisation, le microcontrôleur commande le basculement d'un commutateur entre une position de communication à courte distance pour laquelle l'antenne est connectée au transpondeur RF-ID et déconnectée du transcepteur et une position de communication à moyenne et longue distance pour laquelle l'antenne est connectée au transcepteur et déconnectée du transpondeur.

A la fin de chaque communication avec le lecteur, le commutateur est systématiquement replacé en position de communication à courte distance.

Selon un autre mode de réalisation, la communication à moyenne et longue distance utilise une gamme de fréquence différente que celle de la communication à courte distance. L'antenne est conçue pour fonctionner dans les deux gammes de fréquence. Un coupleur sélectif en fréquence relie simultanément le transcepteur à l'antenne dans une gamme de fréquence, et le transpondeur RF-ID à l'antenne dans une autre gamme de fréquence.

De façon avantageuse, à la fin de chaque communication avec le lecteur, le dispositif n'est plus alimenté électriquement à l'exception de l'horloge.

L'invention concerne également un dispositif de communication radiofréquence RF avec un lecteur, le dispositif pouvant communiquer au moins sur une courte distance et sur une moyenne distance et comprenant une antenne et un transpondeur RF-ID relié à l'antenne. Selon l'invention, le dispositif comporte en outre un microcontrôleur programmé, un transcepteur relié au microcontrôleur et une source d'alimentation électrique, la communication à courte distance étant effectuée à l'aide de l'antenne et du transpondeur. Le transpondeur comprend aussi des moyens pour détecter dans un message envoyé par le lecteur la présence d'une commande de réveil et des moyens pour connecter à la source d'alimentation électrique au moins le microcontrôleur lorsque la commande de réveil est détectée, la communication à moyenne distance pouvant alors s'effectuer à l'aide du microcontrôleur et du transcepteur.

Selon un mode réalisation, les moyens pour connecter le microcontrôleur à la source d'alimentation électrique comprennent un relais reliant le microcontrôleur à la source d'alimentation électrique, la position ouverte ou fermée du relais étant commandée par le transpondeur.

De façon avantageuse, le dispositif permet en outre une communication à longue distance et, à cet effet, il comporte une horloge permettant de réveiller périodiquement le microcontrôleur et le transcepteur lesquels assurent la communication à longue distance.

Selon un autre mode de réalisation, le dispositif comporte un commutateur connecté à l'antenne, le transcepteur et le transpondeur étant connectés en parallèle avec le commutateur lequel peut occuper deux positions, une position de communication à courte distance pour laquelle l'antenne est connectée au transpondeur et une position de communication moyenne ou longue portée pour laquelle l'antenne est reliée au transcepteur.

Le dispositif comporte des moyens pour systématiquement ramener le commutateur en position de communication à courte distance après chaque communication à moyenne ou longue portée.

Selon un autre mode de réalisation, le dispositif comporte un coupleur sélectif en fréquence qui permet de relier simultanément l'antenne et le transcepteur dans une première gamme de fréquence, et l'antenne et le transpondeur dans une seconde gamme de fréquence.

De préférence, le dispositif comporte des moyens pour systématiquement déconnecter le microcontrôleur de la source d'alimentation électrique après chaque communication à moyenne ou longue distance

Le microcontrôleur peut être un microprocesseur ou un circuit électronique sous forme logique câblée.

Les communications entre le lecteur et le dispositif sont établies dans une bande de fréquences, notamment les fréquences UHF comprises entre 300 MHz et 3000 MHz, de préférence dans l'une des bandes de fréquences [300 et 450 MHz], [860 et 930 MHz] et [2400 à 2600 MHz].

D'autres caractéristiques et avantages de l'invention ressortiront de la description suivante, donnée uniquement à titre d'exemple et faite en référence aux dessins annexés sur lesquels :
- la figure 1 illustre schématiquement un mode de réalisation préféré de l'invention; et
- les figures 2 à 5 illustrent différents modes d'utilisation de l'invention.

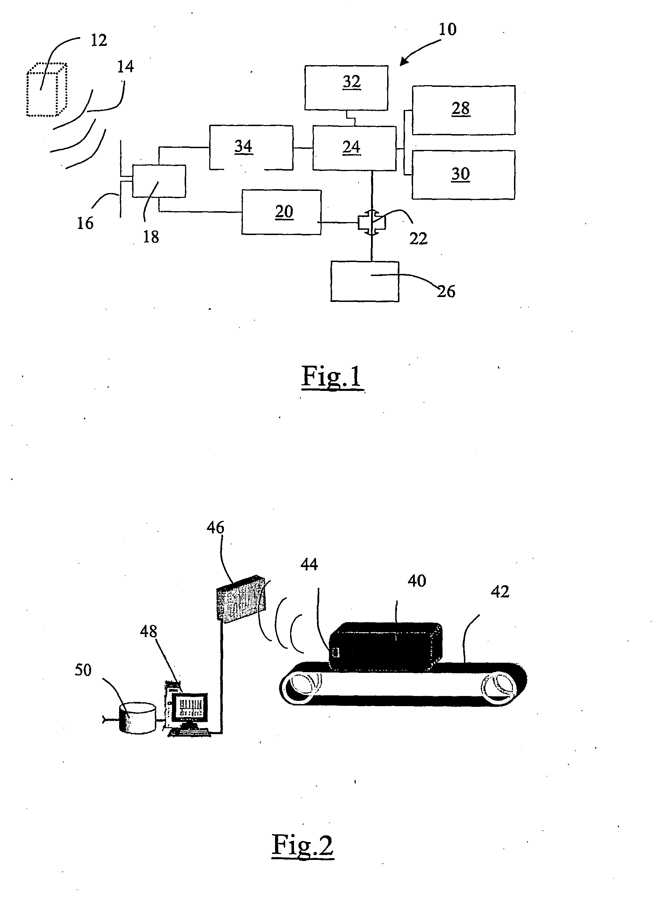

Le dispositif RF 10 représenté schématiquement sur la figure 1 est destiné à communiquer par ondes radio 14 avec un dispositif 12 capable de dialoguer (interroger et/ou répondre) avec le dispositif RF 10. Le dispositif 12 est appelé par la suite "lecteur". Les ondes 14 transportent des messages destinés au dispositif RF 10. Le lecteur gère la communication avec ce dispositif. Il fait généralement partie d'un réseau de communication et est relié par liaison avec ou sans fil à un terminal d'acquisition et de traitement des données en provenance du dispositif RF 10, les données étant recueillies à l'aide du lecteur 12. Le terminal peut être un simple ordinateur, un serveur ou un système plus complexe qui peut comprendre de façon classique un ou plusieurs ordinateurs supplémentaires, une ou plusieurs mémoires, une ou plusieurs bases de données, etc. Le dispositif 10 est destiné à être associé à un objet, par exemple par fixation sur ledit objet. En pratique, le lecteur 12, qui peut être fixe ou mobile, communique généralement avec une pluralité de dispositifs identiques 10, bien qu'en principe un lecteur peut être dédié à un seul dispositif RF.

Le dispositif 10 comporte une antenne 16 permettant la communication radio avec le lecteur 12. Le type et la géométrie de l'antenne 16 sont choisis en fonction des bandes de fréquence utilisées pour la communication avec le lecteur. Elle peut être de différents types, par exemple simple ou multiple, active ou passive. Elle est adaptée pour opérer avantageusement en UHF (de 300 MHz à 3000 MHz), mais de préférence dans les bandes de fréquences généralement autorisées pour ce type de dispositif [300 et 450 MHz], [860 et 930 MHz] et [2400 à 2600 MHz]. Les fréquences situées autour de (et incluant) 900 MHz sont cependant préférées pour les performances qu'elles procurent en terme de consommation électrique, de vitesse de transmission et de portée de communication.

L'antenne 16 est connectée, par un commutateur 18, à un transpondeur RF-ID 20 réalisé de façon classique sous forme d'une puce électronique. Le transpondeur 20 peut être du type passif, et dans ce cas il tire son énergie pour fonctionner du signal RF-ID qu'il reçoit du lecteur 12, ou du type semi passif si l'énergie fournie par le signal RF-ID n'est pas suffisante pour permettre au transpondeur de fonctionner. Il est alors connecté à une source d'énergie électrique (à la pile 26 pour le mode de réalisation de la figure 1). Le transpondeur ne comportant pas d'éléments actifs UHF, sa consommation d'énergie électrique est très faible (de l'ordre du microwatt).

Le transpondeur RF-ID 20 comporte des moyens de détection d'un signal de commande envoyé par le lecteur. Ce signal commande l'alimentation électrique du dispositif 10. Le signal de commande peut être sous forme d'un signal ayant une fréquence particulière et dont l'amplitude excède un seuil de sensibilité. Par exemple, le signal de commande peut correspondre à la survenance des ondes radio 14 illustrées à la figure 1. De façon alternative, le signal de commande peut être sous forme d'un message spécifique transporté par les ondes radio 14. Dans ce cas, le transpondeur RF-ID 20 peut comprendre un microcontrôleur élémentaire programmé pour analyser les messages transportés par les ondes radio 14 et pour ainsi reconnaitre un message de commande parmi ces messages. D'une autre façon, le transpondeur RF-ID 20 peut comprendre des circuits logiques câblés qui examinent des messages entrants et qui fournissent un résultat « vrai » en cas de présence d'un message de réveil.

A la réception du signal de commande, le transpondeur 20 commande un relais 22, lequel connecte un microcontrôleur programmé 24 avec une source d'alimentation électrique 26, de préférence sous forme d'une pile électrique longue durée, généralement (mais non nécessairement) non rechargeable. Le relais est un simple relais électronique. Le microcontrôleur 24 peut être un microprocesseur ou réalisé sous forme de logique câblée. Un programme contenant une suite d'instructions est chargé dans une mémoire du microcontrôleur ou dans une mémoire annexe 28 connectée au microcontrôleur. Dans les deux cas, la mémoire est de taille suffisante pour enregistrer les données nécessaires à la réalisation des différentes fonctions du dispositif 10. Un capteur 30 (un thermomètre, un capteur de pression ou de vibration par exemple) et son électronique associée peuvent être connectés au microcontrôleur 24.

Une horloge 32 est connectée au microcontrôleur 24. Cette horloge est à basse consommation et les signaux qu'elle émet sont capables d'assurer le "réveil" programmé du microcontrôleur 24.

Un transcepteur (transmetteur/récepteur) RF actif 34 est connecté d'une part au microcontrôleur 24 et d'autre part au commutateur 18, lequel est relié à l'antenne 16. Il fonctionne à la même fréquence que le transpondeur RF-ID 20 et donc de préférence autour de 900 MHz. Du fait qu'il inclut des composants UHF actifs à hétérodyne, il nécessite pour fonctionner d'être connecté à la source d'énergie électrique 26. Cette connexion est réalisée par l'intermédiaire du microcontrôleur 24 qui commande la connexion ou la déconnexion du transcepteur 34.

A l'état de repos, la pile électrique 26 n'est connectée à aucun des éléments du dispositif 10, à l'exception de l'horloge 32 et éventuellement du transpondeur 20 lorsqu'il est du type semi-actif, l'horloge ayant besoin pour fonctionner d'une intensité de courant extrêmement faible.

En fonctionnement courte et moyenne portées, le lecteur 12 envoie au dispositif 10 un signal électromagnétique de type RF-ID. Ce signal est capté par l'antenne 16, puis dirigé par le commutateur 18 vers le transpondeur 20. Le signal RF-ID fournit l'énergie suffisante pour le fonctionnement du transpondeur 20. Deux cas peuvent se présenter.

Selon un premier cas, qui concerne le fonctionnement à courte portée, le signal RF-ID comprend simplement une demande du code d'identification du transpondeur 20; le transpondeur se réveillant et répondant par l'envoi au lecteur 12 de son code d'identification. Le signal RF-ID peut également être codé, le transpondeur 20 décodant le signal et ne répondant au lecteur que s'il valide le code. La communication peut se poursuivre entre le lecteur et le transpondeur 20 selon un standard de communication de transpondeur RF. Le transpondeur 20 peut être simplement du type passif.

Selon un deuxième cas, qui concerne le fonctionnement à moyenne portée, le signal électromagnétique RF-ID émis par le lecteur réveille le transpondeur 20. Ce signal peut comprendre une commande de réveil pour basculer le relais 22 afin de connecter le microcontrôleur 24 à la pile 26. Le transpondeur 20 exécute alors la commande de réveil. Le signal RF-ID peut également être codé et dans ce cas le transpondeur déchiffre le signal et ne bascule le relais 22 que si le code est validé. Le microcontrôleur 24 exécute alors le programme chargé dans sa mémoire interne ou dans la mémoire 28. Il commence par ordonner la mise sous tension électrique du transcepteur 34 et éventuellement de la mémoire 28 et du capteur 30 et de son électronique associée, puis le positionnement du commutateur 18 de façon à relier le transcepteur 34 à l'antenne 16. Le microcontrôleur 24 envoie alors au lecteur 12 le code d'identification du dispositif 10, qui peut être identique à celui du transpondeur 20, par l'intermédiaire du transcepteur 34, du commutateur 18 et de l'antenne 16. La réponse du microcontrôleur peut aussi être plus complète et inclure par exemple des données relatives à son horloge interne ce qui permet de synchroniser le lecteur 12 et le dispositif 10. Ce dernier est alors à l'écoute du lecteur 12 et une communication à moyenne distance peut s'instaurer. Selon un autre mode de fonctionnement, le transpondeur 20 peut directement répondre au lecteur en lui envoyant son code d'identification et ensuite connecter la pile 26 au microcontrôleur 24, lequel commence alors l'exécution de son programme comme précédemment à l'exclusion de l'envoi de son identification puisque c'est déjà fait. A la fin de la communication moyenne portée, le microcontrôleur 24 commande systématiquement le basculement du commutateur 18 de façon à connecter l'antenne 16 avec le transpondeur 34, puis le repositionnement du relais 22 de façon à couper l'alimentation électrique du dispositif 10, à l'exception de l'horloge 32.

En fonctionnement longue portée, l'horloge 32 envoie un signal de réveil au microcontrôleur 24, lequel est alors connecté à la pile 26 ainsi que le transcepteur 34, la mémoire 28 et éventuellement le capteur 30. Le microcontrôleur exécute alors son programme lui permettant d'engager une communication longue portée à travers le transcepteur 34, le commutateur 18 et l'antenne 16. Pour cela, le commutateur 18 est positionné de façon à connecter le transcepteur 34 à l'antenne 16.

Cependant, afin d'éviter une collision entre deux types différents de communications et pour s'assurer de la disponibilité du dispositif en mode RF-ID, le microcontrôleur donne la priorité aux communications à courte distance (en fonctionnement transpondeur RF-ID), puis aux communications moyenne portée. Pour cela, il vérifie tout d'abord qu'il n'y a pas eu de lecture par le mode moyenne portée depuis un certain temps, par exemple de l'ordre de la minute. Le microcontrôleur s'assure ensuite, par exemple à travers la fonction récepteur du transcepteur, de ce qu'aucun lecteur ne cherche à l'interroger par un mode transpondeur. Si ces deux conditions ne sont pas réunies, il annule la demande de communication longue portée et reprogramme l'horloge 32 pour l'envoi d'un nouveau signal de réveil à un moment choisi de préférence de façon aléatoire, par exemple par tirage aléatoire selon le protocole ALOHA. De plus, on veut éviter qu'une communication longue portée déjà établie empêche l'aboutissement d'une interrogation RFID par le mode communication courte portée. A cette fin, la durée d'un message de communication longue portée doit être très courte par rapport à la durée d'une interrogation RF-ID par un lecteur. De façon avantageuse, la communication longue portée est alors coupée en message brefs et après l'envoi de chaque message bref le microcontrôleur vérifie qu'aucun signal d'interrogation RF-ID n'est envoyé par un lecteur. Par exemple, on peut décider qu'une transmission et une réception ne dure pas plus de 50 ms. Après chaque période de 50 ms, le microcontrôleur écoute pour vérifier qu'il ne reçoit pas de signal d'interrogation RF-ID en provenance d'un lecteur. Si cette condition est remplie, il poursuit la communication à longue portée. Si cette condition n'est pas remplie, il interrompt la communication à longue portée et reprogramme l'horloge 32 pour l'envoi d'un nouveau signal de réveil qui lui permettra de reprendre la communication interrompue.

Comme pour les communications moyenne portée, à la fin de chaque communication longue portée le commutateur 18 est systématiquement positionné de façon à connecter le transpondeur 20 avec l'antenne 16 et le relais 22 est basculé afin de couper l'alimentation électrique du dispositif 10, à l'exception de l'horloge 32. Le dispositif 10 est alors endormi.

Les communications courte, moyenne et longue portées entre le lecteur et le dispositif 10 peuvent utiliser des couches communes de protocole de communication, la couche physique du protocole (c'est-à-dire la couche concernant la transmission et la réception des bits de données à travers l'interface de communication) devant cependant être différente selon que la communication est à courte ou moyenne et longue portée.

Pour les communications à courte portée, il est avantageux d'utiliser un protocole standard, tel que par exemple le protocole EPC Classe 1, génération 2 ou ISO 18000-6c, ces deux protocoles normalisés étant équivalents. La fréquence de communication est située dans la bande 860 à 960 MHz et la modulation des signaux RF est du type ASK pour la communication dans le sens lecteur-dispositif RF, avec une cadence de 26,7 kbps à 128 kbps, et du type ASK ou PSK dans le sens dispositif RF-lecteur, avec une cadence de 40 kbps à 640 kbps (kbps signifiant kilobits par seconde). A titre d'exemple, le protocole EPC classe 1, génération 2, permet de lire de 600 à 1600 dispositifs RF en mode transpondeur RF-ID avec une portée variant de 6,6 à 7 mètres pour les opérations de lecture.

Le protocole de la communication à moyenne portée peut avantageusement utiliser la couche MAC (Media Access Control) et la couche logique du protocole utilisé pour la communication à courte portée.

Les communications à longue portée peuvent utiliser un protocole de communication très basse consommation, tel que définit par la norme IEEE 802.15.4 et la norme Zigbee.

Sur la figure 1, un seul lecteur 12 a été représenté mais il est évident qu'un lecteur différent peut être utilisé pour chaque type de portée de communication (à courte, moyenne ou longue portée). Plusieurs lecteurs équivalents 12 peuvent opérer simultanément dans la zone de couverture RF du même dispositif 10. Les conflits de communication sont typiquement gérés par les protocoles de communication utilisés et par les logiciels associés aux terminaux et au réseau de communication.

Selon un autre mode de réalisation de l'invention, le commutateur 18 est remplacé par un coupleur sélectif en fréquence. La communication à moyenne et longue distance utilise alors une gamme de fréquence différente de celle utilisée pour la communication courte distance. La même antenne, conçue pour fonctionner dans les deux gammes de fréquence, est utilisée pour les communications à courte, moyenne et longue distance. Le coupleur sélectif en fréquence relie simultanément le transcepteur 34 à l'antenne 16 dans une gamme de fréquence, et le transpondeur RF-ID 20 à l'antenne 16 dans une autre gamme de fréquence.

Les figures 2 à 5 illustrent différentes utilisations de l'invention, un dispositif RF identique au dispositif 10 de la figure 1 étant fixé à un produit, une marchandise ou un équipement. Un dispositif RF pourrait également être fixé à un emballage ou container contenant plusieurs produits, ce qui permettrait de s'intéresser non seulement aux produits eux-mêmes mais aussi à l'emballage ou container.

Sur la figure 2, des produits représentés symboliquement par l'un d'eux, le produit 40, sont en cours de fabrication ou de transformation ou de reconditionnement et défilent sur un tapis roulant 42. Un dispositif RF 44 identique au dispositif 10 de la figure 1 est fixé sur chacun des produits 40. Un lecteur RF 46 est placé à proximité des produits de façon à établir une communication courte et moyenne portée. Le lecteur est connecté par voie filaire à une station comprenant un ordinateur 48 et une base de données 50. Ces derniers forment avec le lecteur 46 et les dispositifs 44 un réseau de communication.

Le lecteur émet un signal d'interrogation RF-ID ce qui réveille les dispositifs 44. Ces derniers répondent en transmettant leur identité. A travers la liaison courte distance, le lecteur sélectionne parmi les dispositifs 44 qui lui ont répondus, ceux avec lesquels il souhaite établir une communication moyenne distance. Les communication moyenne distance particulières qu'il établit, permettent d'échanger des informations entre le lecteur et les mémoires des dispositifs RF, telles que par exemples des informations relatives à la nature du produit, sa destination et/ou son utilisation ou encore des informations relatives aux paramètres de calibration associés au capteur inclus dans le dispositif 44. Les informations échangées peuvent provenir de la base de données 50 ou être transmises à cette base de données.

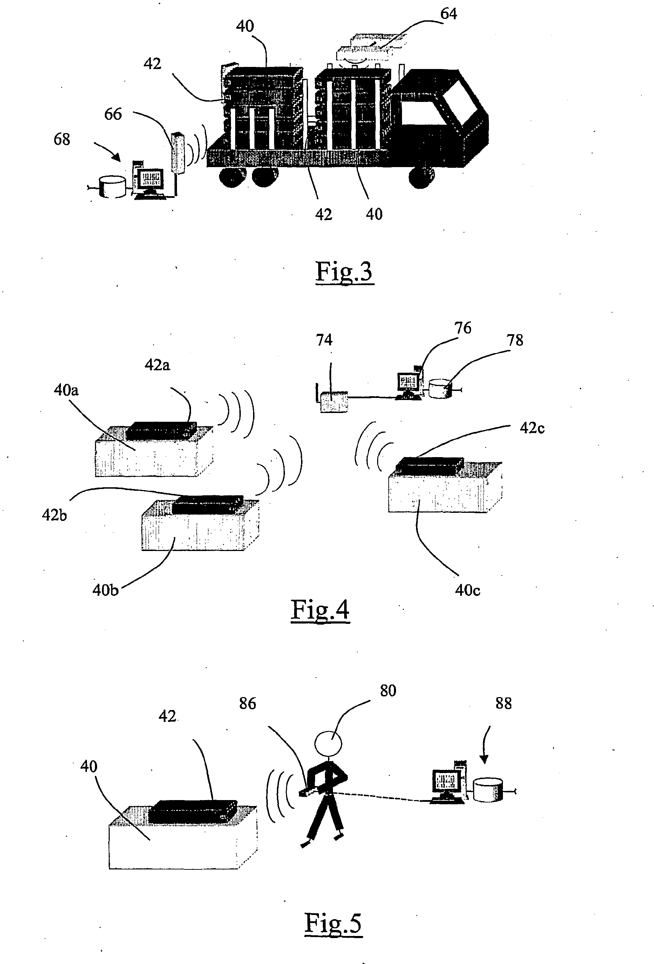

La figure 3 illustre la mise en oeuvre de l'invention pour un inventaire automatisé des produits 40. Ce mode d'utilisation permet d'inventorier rapidement l'ensemble des produits équipés d'un dispositif RF situés dans le champ de couverture d'un lecteur adapté. Ce mode est similaire à l'utilisation classique d'un marqueur RF.

Les produits 40 équipés des dispositifs RF 42 sont manipulés au voisinage de deux lecteurs adaptés 64 et 66. Ceux-ci réveillent les dispositifs RF 42 qui communiquent leurs codes d'identification. Ces codes d'identification sont confrontés aux données de l'infrastructure de communication 68 qui comme précédemment comportent principalement un ordinateur et une base de données. Le lecteur 64 communique avec l'infrastructure 68 par voie hertzienne, par exemple grâce à une connexion WiFi, alors que le lecteur 66 est relié par voie filaire à l'infrastructure 68.

Le protocole de communication entre les dispositifs RF et les lecteurs peut être un protocole standardisé. De cette façon, les lecteurs employés peuvent être des lecteurs standard.

L'utilisation des dispositifs RF illustrée sur la figure 4 concerne le suivi de la présence et de l'état de trois des produits 40, tout au long de la vie de ces produits, référencés 40a, 40b et 40c, et sur lesquels sont fixés les dispositifs RF 42, référencés 42a, 42b et 42c. Sur la figure 4, les trois produits sont dans trois localisations différentes. Le dispositif RF 42 se réveille périodiquement pour initier une communication longue portée avec un lecteur 74 présent dans la zone de couverture de la communication RF. Le lecteur 74 est relié comme précédemment à une infrastructure d'information composée d'un ordinateur 76 auquel est connectée une base de données 78. L'activation de la communication longue portée permet de localiser la présence des produits 40a, 40b et 40c à proximité du lecteur 74. Les informations échangées lors de cette communication peuvent être notamment le code d'identification des produits, une alarme, les mesures obtenues par un capteur associé aux dispositifs 42a, 42b et 42c et le temps restant avant la date de péremption de chacun des produits. La période des communications peut varier, pour s'adapter à des circonstances particulières, par exemple si un problème est détecté sur l'un des produits.

Le mode de fonctionnement illustré sur la figure 5 permet à un opérateur 80 d'échanger des informations à moyenne distance avec un dispositif RF 42 installé sur l'un des produits 40. L'opérateur 80, équipé d'un lecteur portable 86, réveille par une communication courte portée le dispositif 42. Il initie une communication moyenne portée. Cette communication lui permet d'échanger des informations avec la mémoire du dispositif RF 42. Si plusieurs dispositifs RF sont dans la zone de couverture RF du lecteur 86, l'opérateur peut les discriminer suivant leur code d'identification ou suivant la puissance du signal reçu. Le dispositif RF 42 peut également faciliter son identification par l'émission d'un signal sonore ou lumineux. Le lecteur portable 86 peut être relié de façon permanente ou intermittente à une infrastructure d'information 88, par une liaison filaire ou sans fil.

Des dispositifs RF conformes à l'invention peuvent également être utilisés en association avec des êtres humains ou des animaux. Par exemple, ils peuvent être utilisés pour la surveillance de personnes malades ou convalescentes, qu'elles soient hospitalisées ou à leur domicile. Des informations relatives à un patient sont stockées dans la mémoire d'un dispositif RF conforme à l'invention. Un ou plusieurs capteurs associés à ce dispositif permettent de surveiller des paramètres particuliers du patient. Le fonctionnement en courte portée permet d'enregistrer les déplacements du patient. Le mode de communication longue portée par réveil programmé à l'aide d'une horloge interne permet de transmettre les données acquises par le ou les capteurs ainsi qu'éventuellement une alarme. Les communications moyenne portée permettent d'accéder aux informations relatives au patient et à l'historique des données acquises par le ou les capteurs.

D'autres modes de réalisation que ceux décrits et représentés peuvent être conçus par l'homme du métier sans sortir du cadre de la présente invention.

## Revendications

1. Procédé de communication radio fréquence RF selon lequel une communication peut être établie entre un lecteur (12) et un dispositif RF (10) au moins sur une moyenne distance et sur une courte distance, la communication courte distance étant établie à l'aide d'un transpondeur RF-ID (20) et d'une antenne (16), **caractérisé en ce que**, pour établir la communication à moyenne distance, le lecteur (12) envoie un signal de commande au transpondeur RF-ID (20) afin de commuter au moins un microcontrôleur (24) et un transcepteur (34) d'un état passif à un état actif, ledit microcontrôleur (24) envoyant au lecteur (12), à l'aide dudit transcepteur (34), un message de réponse comprenant au moins l'identification du dispositif (10).

2. Procédé selon la revendication 1 **caractérisé en ce que** ledit message de réponse comprend également des données permettant de synchroniser la communication moyenne distance dudit lecteur (12) avec le dispositif (10).

3. Procédé selon l'une des revendications précédentes **caractérisé en ce qu'**il permet également une communication à longue distance, un signal de réveil émis par une horloge (32) réveillant ledit microcontrôleur (24), lequel communique alors avec ledit lecteur (12) à l'aide dudit transcepteur (34).

4. Procédé selon la revendication 3 **caractérisé en ce que**, après avoir reçu ledit signal d'horloge de réveil, ledit microcontrôleur (24) vérifie si le dispositif (10) est déjà en cours de fonctionnement en courte ou moyenne distance et, si c'est le cas, il décide d'établir la communication en fonctionnement longue portée à un instant ultérieur.

5. Procédé selon la revendication 3 **caractérisé en ce qu'**une communication longue distance est découpée en plusieurs messages de transmission - réception et entre deux messages successifs ledit microcontrôleur (24) vérifie que ledit lecteur (12) n'émet pas de signal d'interrogation en mode RF-ID.

6. Procédé selon l'une des revendications précédentes **caractérisé en ce que**, à la fin de chaque communication avec ledit lecteur (12), le dispositif n'est plus alimenté électriquement à l'exception d'une horloge (32).

7. Dispositif (10) de communication radiofréquence RF avec un lecteur (12), le dispositif pouvant communiquer au moins sur une courte distance et sur une moyenne distance et comprenant une antenne (16) et un transpondeur RF-ID (20) relié à ladite antenne, **caractérisé en ce qu'**il comporte en outre un microcontrôleur (24) programmé, un transcepteur (34) relié audit microcontrôleur (24) et une source d'alimentation électrique (26), la communication à courte distance étant effectuée à l'aide de ladite antenne (16) et dudit transpondeur (20), et **en ce que** ledit transpondeur (20) comprend des moyens pour détecter un signal de commande envoyé par ledit lecteur et des moyens (22) pour connecter au moins ledit microcontrôleur (24) à ladite source d'alimentation (26) lorsque ledit signal de commande est détecté, la communication à moyenne distance pouvant alors s'effectuer à l'aide dudit microcontrôleur (24) et dudit transcepteur (34).

8. Dispositif selon la revendication 7 **caractérisé en ce qu'**il comporte un commutateur (18) connecté d'une part à ladite antenne (16) et d'autre part audit transcepteur (34) et audit transpondeur (20), ledit commutateur pouvant occuper deux positions, une position de communication à courte distance pour laquelle l'antenne est connectée audit transpondeur (20) et une position de communication moyenne ou longue portée pour laquelle l'antenne (16) est reliée au transcepteur (34).

9. Dispositif selon la revendication 7 **caractérisé en ce qu'**il comporte un coupleur sélectif en fréquence capable de connecter simultanément l'antenne (16) au transpondeur RF-ID (20) et au transcepteur (34), dans deux gammes de fréquences distinctes.

10. Dispositif selon l'une des revendications 7 à 9 **caractérisé en ce qu'**il comporte au moins un capteur (30) relié audit microcontrôleur (24).

## Claims

1. A radiofrequency RF communication method according to which a communication can be set up between a reader (12) and an RF device (10) at least over a medium distance and over a short distance, the short distance communication being set up using an RF-ID transponder (20) and an antenna (16), **characterised in that**, to set up the medium distance communication, the reader (12) sends a command signal to the RF-ID transponder (20) in order to switch at least one microcontroller (24) and a transceiver (34) from a passive state to an active state, said microcontroller (24) sending to the reader (12), using said transceiver (34), a reply message comprising at least the identification of the device (10).

2. A method according to claim 1, **characterised in that** said reply message also comprises data which can be used to synchronise the medium distance communication of said reader (12) with the device (10).

3. A method according to one of the previous claims, **characterised in that** it can also be used for a long distance communication, a wake-up signal transmitted by a clock (32) waking up said microcontroller (24), which then communicates with said reader (12) via said transceiver (34).

4. A method according to claim 3, **characterised in that**, after having received said wake-up clock signal, said microcontroller (24) checks whether the device (10) is already in short or medium distance operation and, if this is the case, it decides to set up the long range operation communication at a later time.

5. A method according to claim 3, **characterised in that** a long distance communication is divided into several transmission-reception messages and between two successive messages, said microcontroller (24) checks that said reader (12) is not transmitting any query signals in RF-ID mode.

6. A method according to one of the previous claims, **characterised in that**, at the end of each communication with said reader (12), the device is no longer powered electrically apart from a clock (32).

7. A device (10) for radiofrequency RF communication with a reader (12), the device being able to communicate at least over a short distance and over a medium distance and comprising an antenna (16) and an RF-ID transponder (20) connected to said antenna, **characterised in that** it also includes a programmed microcontroller (24), a transceiver (34) connected to said microcontroller (24) and an electrical power source (26), the short distance communication being carried out using said antenna (16) and said transponder (20), and **in that** said transponder (20) comprises means to detect in a message sent by said reader the presence of a wake-up command and means (22) to connect at least said microcontroller (24) to said power supply source (26) when said wake-up command is detected, the medium distance communication then taking place via said microcontroller (24) and said transceiver (34).

8. A device according to claim 7, **characterised in that** it includes a switch (18) connected to, on the one hand, said antenna (16) and, on the other hand, to said transceiver (34) and to said transponder (20), said switch being able to take two positions, a short distance communication position for which the antenna is connected to said transponder (20) and a medium or long range communication position for which the antenna (16) is connected to the transceiver (34).

9. A device according to claim 7, **characterised in that** it includes a frequency selective coupler capable of connecting simultaneously the antenna (16) to the RF-ID transponder (20) and to the transceiver (34), in two separate frequency ranges.

10. A device according to one of claims 7 to 9, **characterised in that** it includes at least one sensor (30) connected to said microcontroller (24).

## Patentansprüche

1. Verfahren zur Funkfrequenzkommunikation RF, entsprechend welchem eine Kommunikation zwischen einem Lesegerät (12) und einer RF-Vorrichtung (10) zumindest über eine mittlere Entfernung und über eine kurze Entfernung erstellt werden kann, wobei die Kommunikation über kurze Entfernung mithilfe eines RF-ID Transponders (20) und einer Antenne (16) erstellt wird, **dadurch gekennzeichnet, dass** zur Erstellung der Kommunikation über eine mittlere Entfernung, das Lesegerät (12) ein Steuersignal an den RF-ID Transponders (20) sendet, um mindestens einen Mikrocontroller (24) und einen Transceiver (34) von einem passiven Zustand in einen aktiven Zustand umzuschalten, wobei der Mikrocontroller (24) dem Lesegerät (12), mithilfe des Transceivers (34) eine Antwortmeldung sendet, die mindestens die Identifizierung der Vorrichtung (10) enthält.

2. Verfahren nach Anspruch 1, **dadurch gekennzeichnet, dass** die Anwortmeldung auch Daten enthält, die es ermöglichen, die Kommunikation über eine mittlere Entfernung des Lesegeräts (12) mit der Vorrichtung (10) zu synchronisieren.

3. Verfahren nach einem der vorstehenden Ansprüche, **dadurch gekennzeichnet, dass** es auch die Kommunikation über eine weite Entfernung ermöglicht, wobei ein von einer Uhr (32) gesendetes Wecksignal den Mikrocontroller (24) aktiviert, der dann mithilfe des Transceivers (34) mit dem Lesegerät (12) kommuniziert.

4. Verfahren nach Anspruch 3, **dadurch gekennzeichnet, dass** der Mikrocontroller (24), nachdem er das Uhrenwecksignal erhalten hat überprüft, ob die Vorrichtung (10) schon über kurze oder mittlere Entfernung in Betrieb ist und, falls dies der Fall sein sollte, entscheidet die Kommunikation in der Betriebsart weite Entfernung zu einem späteren Zeitpunkt zu erstellen.

5. Verfahren nach Anspruch 3, **dadurch gekennzeichnet, dass** eine Kommunikation über weite Entfernung in mehrere Meldungen des Typs Übertragung - Empfangen aufgeteilt ist und der Mikrocontroller (24) zwischen zwei aufeinander folgenden Meldungen überprüft, dass das Lesegerät (12) kein Fragesignal im Modus RF-ID sendet.

6. Verfahren nach einem der vorstehenden Ansprüche, **dadurch gekennzeichnet, dass** die Vorrichtung nach Beendigung jeder Kommunikation mit dem Lesegerät (12) mit Ausnahme einer Uhr (32) nicht mehr mit Strom versorgt wird.

7. Vorrichtung (10) zur Funkfrequenzkommunikation RF mit einem Lesegerät (12), wobei die Vorrichtung (10) mindestens über eine kurze Entfernung und über eine mittlere Entfernung kommunizieren kann und über eine Antenne (16) und einen mit dieser Antenne verbundenen RF-ID Transponder (20) verfügt, **dadurch gekennzeichnet, dass** sie außerdem einen programmierten Mikrocontroller (24), einen mit dem Mikrocontroller (24) verbundenen Transceiver (34) und eine Stromversorgung (26) besitzt, wobei die Kommunikation über kurze Entfernung über die Antenne und den Transponder (20) erfolgt, sowie **dadurch**, dass der Transponder (20) über Mittel zur Erkennung eines Steuersignals verfügt, das vom Lesegerät (12) gesendet wird und über Mittel (22), um mindestens den Mikrocontroller (24) mit der Stromversorgung (26) zu verbinden, wenn das Steuersignal erkannt wird, sodass die Kommunikation über mittlere Entfernung dann mithilfe des Mikrocontrollers (24) und des Transceivers (34) erfolgen kann.

8. Vorrichtung nach Anspruch 7, **dadurch gekennzeichnet, dass** sie einen Umschalter besitzt (18), der einerseits mit der Antenne (16) und andererseits mit dem Transceiver (34) und dem Transponder (20) verbunden ist, wobei der Umschalter auf zwei Positionen eingestellt werden kann: eine Position zur Kommunikation über kurze Entfernung, für welche die Antenne mit dem Transponder (20) verbunden wird und eine Position zur Kommunikation über mittlere oder weite Entfernung, für welche die Antenne mit dem Transceiver (34) verbunden wird.

9. Vorrichtung nach Anspruch 7, **dadurch gekennzeichnet, dass** sie einen Frequenzrichtkoppler enthält, um die Antenne (16) gleichzeitig an den Transponder RF-ID (20) und an den Transceiver (34) in zwei verschiedenen Frequenzbereichen anzuschließen.

10. Vorrichtung nach einem der Ansprüche 7 bis 9, **dadurch gekennzeichnet, dass** sie mindestens einen Sensor (30) enthält, der mit dem Mikrocontroller (24) verbunden ist.
